# EUROPÄISCHE PATENTSCHRIFT

(11) **EP 0 657 508 B1**
(45) Veröffentlichungstag und Bekanntmachung des Hinweises auf die Patenterteilung: **25.10.2000**
(21) Anmeldenummer: 94810691.9
(22) Anmeldetag: 05.12.1994
(51) Int. Cl.: C09B 62/085, C09B 62/51

(54) **Reaktivfarbstoffe, Verfahren zu deren Herstellung und deren Verwendung**
Reactive dyestuffs, process for their preparation and the use thereof
Colorants réactifs, procédé pour leur préparation et leur utilisation

(30) Priorität: 13.12.1993 CH 370293
(43) Veröffentlichungstag der Anmeldung: 14.06.1995
(73) Patentinhaber: Ciba Specialty Chemicals Holding Inc., 4057 Basel (CH)
(72) Erfinder: Jordine, Guido, Dr., D-79098 Freiburg (DE); Adam, Jean-Marie, Dr., F-68300 Rosenau (FR)

(56) Entgegenhaltungen:
- EP-A- 0 071 985
- JP-A- 56 140 185
- JP-A- 57 049 663
- JP-A- 60 047 071

## Beschreibung

Die vorliegende Erfindung betrifft neue Reaktivfarbstoffe, Verfahren zu deren Herstellung und deren Verwendung zum Färben oder Bedrucken Von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Weiterhin sollen die mit den Reaktivfarbstoffen erhaltenen Färbungen eine gute Faseregalität aufweisen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel 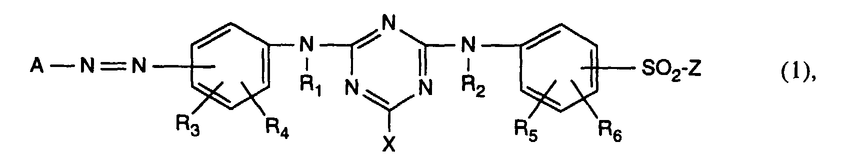 worin
R₁ und R₂ unabhängig voneinander Wasserstoff oder C₁-C₄-Alkyl,
R₃, R₄, R₅ und R₆ unabhängig voneinander Wasserstoff, C₁-C₄-Alkyl, C₁-C₄-Alkoxy, C₂-C₄-Alkanoylamino, Ureido oder Halogen sind,
X Chlor oder Fluor,
Z eine Gruppe der Formel -CH=CH₂ oder -CH₂-CH₂-Y und Y eine Abgangsgruppe ist, und
A ein Rest der Formel 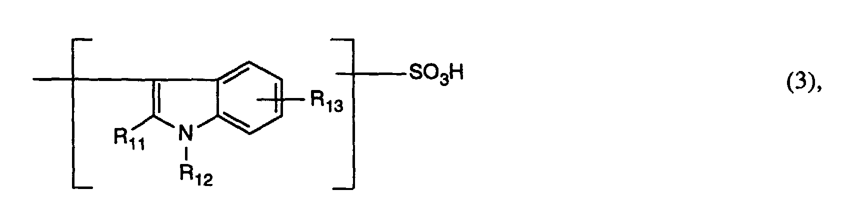 worin
R₁₁ Wasserstoff, C₁-C₈-Alkyl oder unsubstituiertes oder durch C₁-C₄-Alkyl, C₁-C₄-Alkoxy, C₂-C₄-Alkanoylamino oder Halogen substituiertes Phenyl,
R₁₂ Wasserstoff oder C₁-C₈-Alkyl und
R₁₃ Wasserstoff, C₁-C₄-Alkyl, C₁-C₄-Alkoxy, C₂-C₄-Alkanoylamino oder Halogen
bedeutet;
   oder ein Rest der Formel 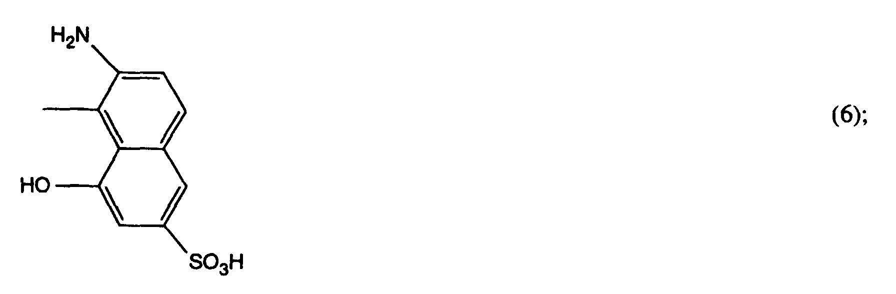 oder ein Rest der Formel 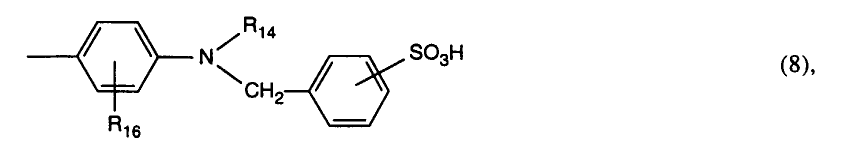 worin
R₁₄ Wasserstoff oder C₁-C₄-Alkyl und R₁₆ Wasserstoff, C₁-C₄-Alkyl, C₁-C₄-Alkoxy, C₂-C₄-Alkanoylamino oder Halogen bedeutet; ist.

In der JP-A-57 049 663 werden Farbstoffe offenbart, die sich Von den erfindungsgemässen Farbstoffen durch den Rest A unterscheiden.

Der Rest Y ist bevorzugt eine Gruppe der Formel -Cl, -OSO₃H, -SSO₃H, -OCO-CH₃, -OCO-C₆H₅ oder -OPO₃H₂, insbesondere eine Gruppe der Formel -Cl oder -OSO₃H und vorzugsweise eine Gruppe der Formel -OSO₃H.

Bei dem Rest Z handelt es sich bevorzugt um eine Gruppe der Formel -CH₂-CH₂-OSO₃H.

Die Reaktivfarbstoffe der Formel (1) enthalten nur eine Sulfogruppe, welche im Rest A enthalten ist.

Bei dem Rest X handelt es sich bevorzugt um Chlor.

Als C₁-C₄-Alkyl kommen für R₁, R₂, R₃, R₄, R₅, R₆, R₁₃, R₁₄ und R₁₆ Methyl, Aethyl, Propyl, Isopropyl, Butyl, Isobutyl, sek.-Butyl oder tert.-Butyl, insbesondere Methyl oder Äthyl, in Betracht. Die gleichen Bedeutungen und Bevorzugungen gelten für die anderen, oben genannten C₁-C₄-Alkyl-Substituenten.

Bedeuten R₁₁ und R₁₂ einen C₁-C₈-Alkylrest, so handelt es sich z.B. um Methyl, Aethyl, Propyl, Isopropyl, Butyl, Isobutyl, sek.-Butyl, tert.-Butyl, sowie um geradkettiges oder verzweigtes Pentyl, Hexyl, Heptyl oder Octyl.

Als C₁-C₄-Alkoxy kommen für R₃, R₄, R₅, R₆, R₁₃ und R₁₆ beispielsweise Methoxy, Aethoxy, Propoxy, Isopropoxy, Butoxy, sek.-Butoxy, Isobutoxy oder tert.-Butoxy, insbesondere Methoxy oder Äthoxy, in Betracht. Die gleichen Bedeutungen und Bevorzugungen gelten für die anderen, oben genannten C₁-C₄-Alkoxy-Substituenten.

Als C₂-C₄-Alkanoylamino kommen für R₃, R₄, R₅, R₆, R₁₃ und R₁₆ beispielsweise Acetylamino, Propionylamino oder Butyrylamino, insbesondere Acetylamino, in Betracht. Die gleichen Bedeutungen und Bevorzugungen gelten für die anderen, oben genannten C₂-C₄-Alkanoylamino-Substituenten.

Als Halogen kommen für R₃, R₄, R₅, R₆, R₁₃ und R₁₆ beispielsweise Fluor oder Brom und insbesondere Chlor in Betracht. Die gleichen Bedeutungen und Bevorzugungen gelten für die anderen, oben genannten Halogen-Substituenten.
R₁ und R₂ sind bevorzugt unabhängig voneinander Wasserstoff, Methyl oder Äthyl, insbesondere Wasserstoff.
R₃, R₄, R₅ und R₆ sind bevorzugt unabhängig voneinander Wasserstoff, C₁-C₄-Alkyl, C₁-C₄-Alkoxy oder Halogen, insbesondere Wasserstoff, Methyl oder Äthyl und vorzugsweise Wasserstoff.
R₁₃ ist bevorzugt Wasserstoff, C₁-C₄-Alkyl, C₁-C₄-Alkoxy oder Halogen, insbesondere Wasserstoff.
R₁₁ ist bevorzugt C₁-C₄-Alkyl oder insbesondere unsubstituiertes oder durch C₁-C₄-Alkyl, C₁-C₄-Alkoxy, C₂-C₄-Alkanoylamino oder Halogen substituiertes Phenyl. Besonders bevorzugt ist R₁₁ unsubstituiertes Phenyl.
R₁₂ ist bevorzugt Wasserstoff.
R₁₄ ist bevorzugt C₁-C₄-Alkyl und vorzugsweise Äthyl.
R₁₆ ist bevorzugt Wasserstoff oder C₁-C₄-Alkyl, insbesondere Wasserstoff oder Methyl.

Besonders bevorzugte Reste A der Formel (3) sind solche der Formel 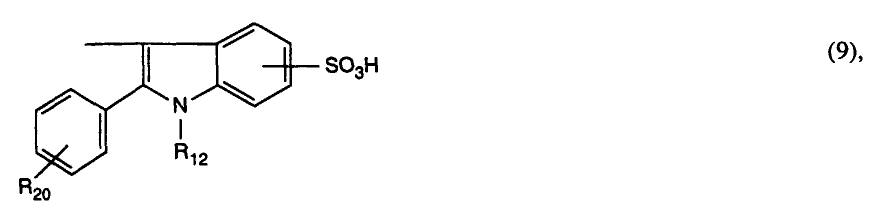 worin R₁₂ Wasserstoff oder C₁-C₈-Alkyl und R₂₀ Wasserstoff, C₁-C₄-Alkyl, C₁-C₄-Alkoxy, C₂-C₄-Alkanoylamino oder Halogen ist. Ganz besonders bevorzugt bedeuten hierbei R₁₂ und R₂₀ Wasserstoff.

Als Reste A sind solche der Formeln (3) und (6) bevorzugt, vorzugsweise Reste der Formel (6). Für die genannten Reste A gelten hierbei die oben angegebenen Bedeutungen und Bevorzugungen.

Bevorzugt sind Reaktivfarbstoffe der Formel (1), worin R₁, R₂, R₃, R₄, R₅ und R₆ Wasserstoff sind, Y eine Gruppe der Formel -OSO₃H und X Chlor ist. Bei dem Rest Z handelt es sich hierbei insbesondere um eine Gruppe der Formel -CH₂-CH₂-OSO₃H. Für den Rest A gelten hierbei die oben angegebenen Bedeutungen und Bevorzugungen.

Besonders bevorzugt sind Reaktivfarbstoffe der Formel 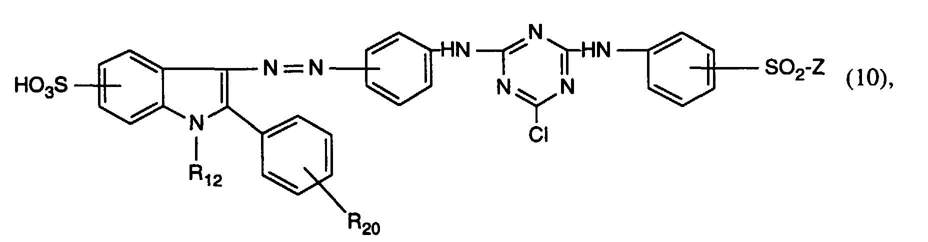 worin R₁₂ Wasserstoff oder C₁-C₈-Alkyl, R₂₀ Wasserstoff, C₁-C₄-Alkyl, C₁-C₄-Alkoxy, C₂-C₄-Alkanoylamino oder Halogen und Z eine Gruppe der Formel -CH=CH₂ oder insbesondere -CH₂-CH₂-OSO₃H bedeutet. R₁₂ und R₂₀ bedeuten hierbei vorzugsweise Wasserstoff.

Ganz besonders bevorzugt sind Reaktivfarbstoffe der Formel 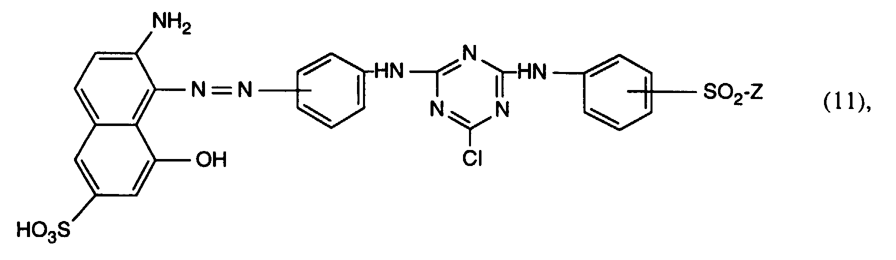 worin Z eine Gruppe der Formel -CH=CH₂ oder insbesondere -CH₂-CH₂-OSO₃H bedeutet.

Gegenstand der Erfindung ist ferner ein Verfahren zur Herstellung der Reaktivfarbstoffe der Formel (1), welches dadurch gekennzeichnet ist, dass man ein Amin der Formel 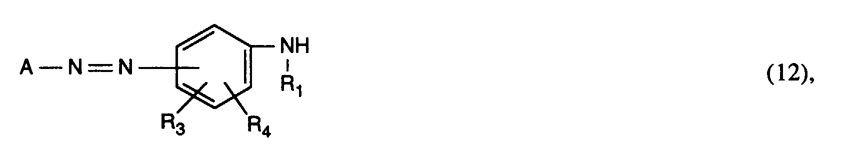 worin A, R₁, R₃ und R₄ die unter Formel (1) angegebenen Bedeutungen haben, mit einer Verbindung der Formel 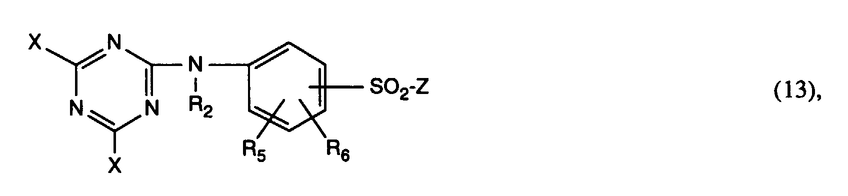 worin Z, X, R₂, R₅ und R₆ die unter Formel (1) angegebenen Bedeutungen haben, kondensiert, und gegebenenfalls den Rest Z in den Rest der Formel -CH=CH₂ überführt.

Die Kondensation erfolgt in der Regel in wässriger Lösung, bei einer Temperatur Von beispielsweise 0 bis 50°C und einem pH-Wert von z.B. 4 bis 9.

Die Überführung des Restes Z in den Rest der Formel -CH=CH₂ erfolgt in der Regel in wässrigem Medium unter alkalischen Bedingungen, bei einem pH-Wert von z.B. 8 bis 12. Die Einstellung des pH-Wertes erfolgt beispielsweise mit Natriumhydroxid. So kann man beispielsweise Reaktivfarbstoffe der Formel (1), welche Sulfatoäthylsulfonylreste enthalten, mit einer Base, wie z.B. Natriumhydroxid, behandein, wobei die Sulfatoäthylsulfonylreste in Vinylsulfonylreste übergehen.

In dem erfindungsgemässen Verfahren zur Herstellung der Reaktivfarbstoffe der Formel (1) gelten für die Substituenten der Verbindungen der Formeln (12) und (13) die zuvor angegebenen Bedeutungen und Bevorzugungen.

Die Verbindungen der Formeln (12) und (13) sind bekannt oder können in Analogie zu bekannten Verfahren hergestellt werden.

So können Amine der Formel (12) dadurch erhalten werden, dass man ein Amin der Formel 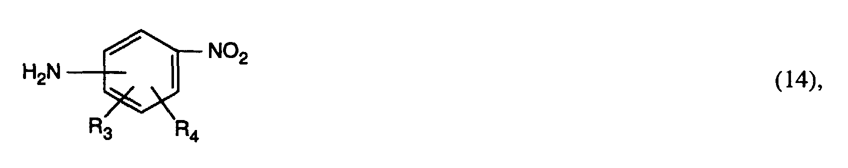 diazotiert, anschliessend die Nitrogruppe zur Aminogruppe reduziert, gegebenenfalls den Rest R₁ einführt, und das erhaltene Zwischenprodukt auf eine Kupplungskomponente der Formel

A-H (15)

kuppelt, wobei A, R₁, R₃ und R₄ die unter Formel (1) angegebenen Bedeutungen haben.

Die Diazotierung des Amins der Formel (14) erfolgt in der Regel durch Einwirken salpetriger Säure in wässrig-mineralsaurer Lösung bei tiefer Temperatur, wie z.B. 0 bis 15°C, die Kupplung auf die Kupplungskomponente der Formel (15) bei sauren bis neutralen pH-Werten, insbesondere bei einem pH-Wert von 2 bis 6.

Die Reduktion der Nitrogruppe kann in üblicher Weise gemäss bekannten Verfahren erfolgen; beispielsweise in wässrigem Medium in Gegenwart von Natriumsulfid.

Der Rest R₁ kann in üblicher Weise gemäss bekannten Alkylierungsreaktionen eingeführt werden.

Verbindungen der Formel (13) können beispielsweise durch Kondensation einer Verbindung der Formel 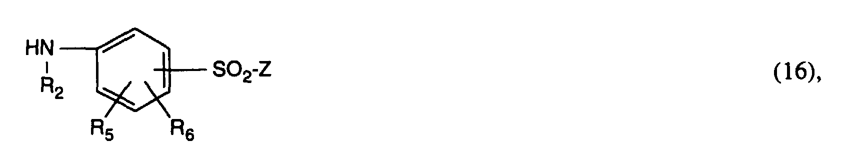 worin Z, R₂, R₅ und R₆ die unter Formel (1) angegebenen Bedeutungen haben, mit Cyanurfluorid oder Cyanurchlorid erhalten werden. Die Kondensation erfolgt gemäss bekannten Verfahren.

Die Reaktivfarbstoffe der Formel (1) liegen entweder in der Form ihrer freien Säure oder vorzugsweise als deren Salze vor. Als Salze kommen beispieisweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Reaktivfarbstoffe der Formel (1) eignen sich zum Färben oder Bedrucken Von stickstoffhaltigen oder hydroxylgruppenhaltigen Fasermaterialien, insbesondere von natürlichen Polyamidfasermaterialien, wie z.B. Wolle, sowie von synthetischen Polyamidfasermaterialien, wie z.B. Polyamid 6 oder Polyamid 6.6, und sind geeignet zum Färben oder Bedrucken von Woll- und synthetischen Polyamid-Mischgeweben oder -Garnen. Das genannte Textilmaterial kann dabei in den verschiedensten Verarbeitungsformen vorliegen, wie z.B. als Faser, Garn, Gewebe oder Gewirke.

Die Reaktivfarbstoffe der Formel (1) können zum Färben oder Bedrucken gemäss den üblichen Färbe- bzw. Druckverfahren verwendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die Reaktivfarbstoffe der Formel (1) ergeben egale Färbungen mit guten Allgemeinechtheiten, insbesondere guter Reib-, Nass-, Nassreib- und Lichtechtheit. Ferner zeichnen sie sich durch gleichmässigen Farbaufbau, ein gutes Aufziehvermögen, hohe Reaktivität, gutes Fixiervermögen, ein sehr gutes Aufbauvermögen und gute Kombinierbarkeit mit anderen Farbstoffen aus. Auf die sonst zur Fixierung übliche Alkalibehandlung, z.B. in Gegenwart von Alkali, kann weitgehend verzichtet werden.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Herstellungsbeispiel: 70 Teile Cyanurchlorid werden in 950 Teilen Eis und 200 Teilen Wasser, unter Zusatz von 3,6 Teilen Dinatriumdihydrogenphosphat · 12 H₂O, 30 Minuten verrührt. Dann wird innerhalb Von 10 Minuten eine auf einen pH-Wert von 5,5 gestellte Lösung von 116,4 Teilen 4-(ß-Sulfatoäthylsulfonyl)-anilin (92%) in 900 Teilen Wasser zugegeben. Der pH wird hierbei durch Zugabe von 2-normaler Natronlauge auf einen Wert von 4,5 bis 5 gehalten. Anschliessend gibt man 500 Teile Aceton zu und rührt bei einer Temperatur von 0 bis 5°C bis die Laugenaufnahme beendet ist. Dann nutscht man den Niederschlag ab und wäscht zunächst mit Wasser und dann mit Aceton nach. Der erhaltene Niederschlag wird bei Raumtemperatur unter Vakuum getrocknet. Man erhält eine Verbindung, welche in Form der freien Säure der Formel 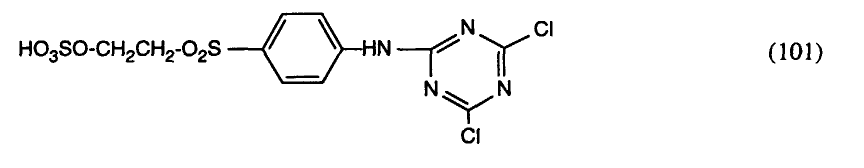 entspricht.

Beispiel 1: 20 Teile der Verbindung der Formel (101) werden in 150 Teile Wasser suspendiert und dann langsam in eine Suspension, welche 24,8 Teile der in Form der freien Säure angegebenen Verbindung der Formel 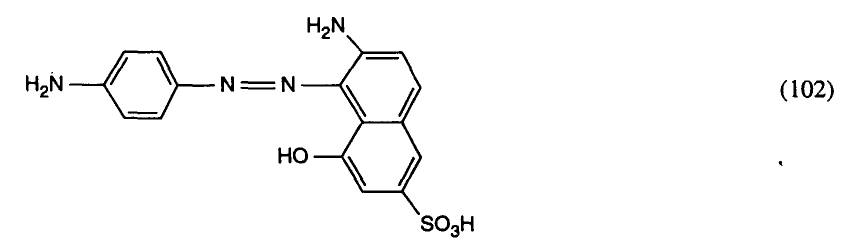 in 150 Teilen Wasser enthält, gegeben. Anschliessend wird der pH auf einen Wert Von 6 gestellt und dann das Reaktionsgemisch auf eine Temperatur von 35°C erwärmt. Der pH wird dabei durch Zugabe von 2-normaler Natronlauge auf einen Wert von 6 gehalten. Nach 2 Stunden ist die Laugenaufnahme beendet. Man gibt Natriumchlorid (ca. 20 Vol.-%, bezogen auf die Reaktionsmischung) zu, nutscht das ausgefallene Produkt ab und wäscht mit einer geringen Menge einer wässrigen Lösung von Natriumchlorid nach. Nach dem Trocknen bei einer Temperatur von 35°C unter Vakuum erhält man einen Farbstoff, der in Form der freien Säure der Verbindung der Formel 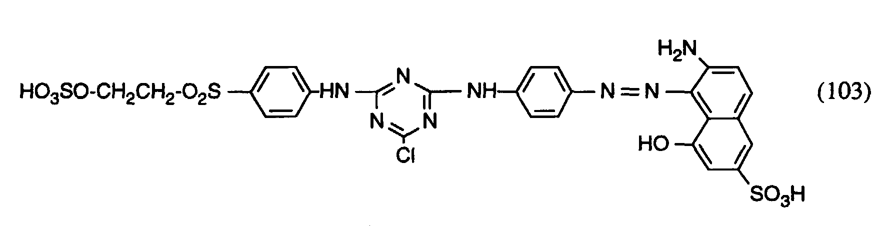 entspricht. Der Farbstoff der Formel (103) färbt Wolle und synthetisches Polyamid in einem brillanten roten Farbton mit guten Licht- und Nassechtheiten.

Beispiele 2 bis 4: In analoger Weise zu Beispiel 1 können die in der folgenden Tabelle angegebenen Farbstoffe erhalten werden, welche Wolle und synthetisches Polyamid in den in Spalte 3 der Tabelle angegebenen Farbtönen färben. Die Farbstoffe der folgenden Tabelle entsprechen der Formel 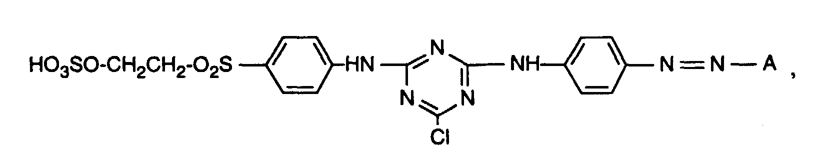 wobei A die in der folgenden Tabelle in Spalte 2 angegebenen Bedeutungen hat.

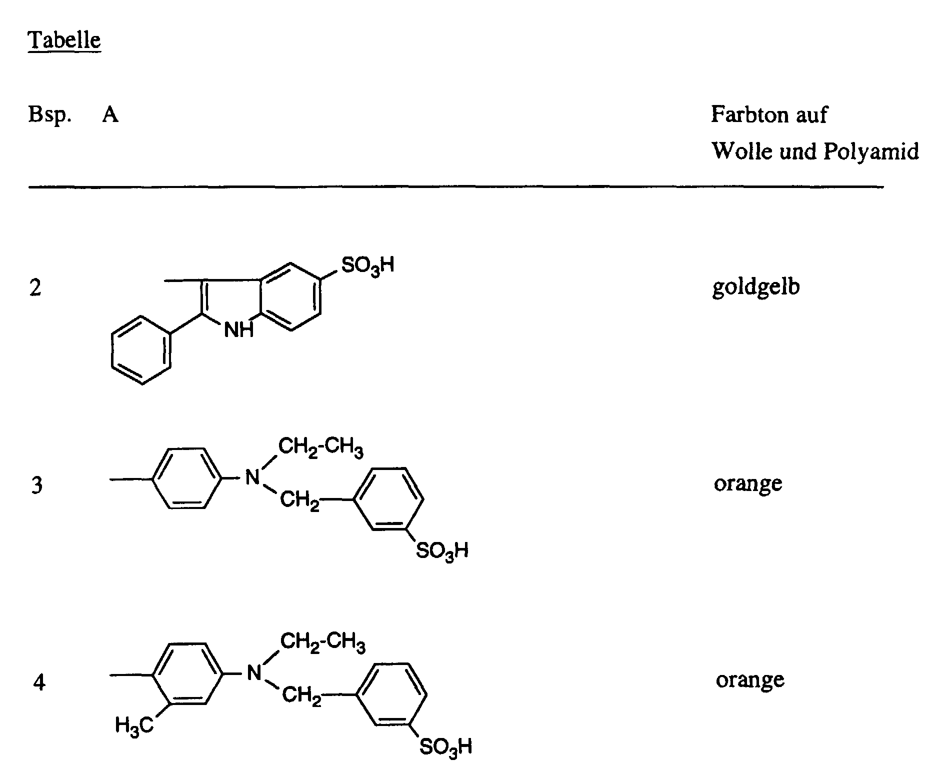

Beispiele 5 bis 10: In analoger Weise zu Beispiel 1 können die in Form der freien Säure angegebenen Farbstoffe der Formeln 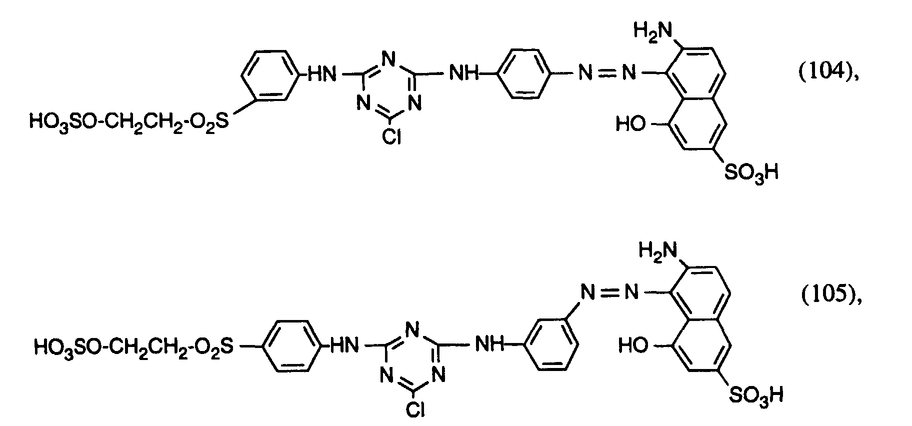 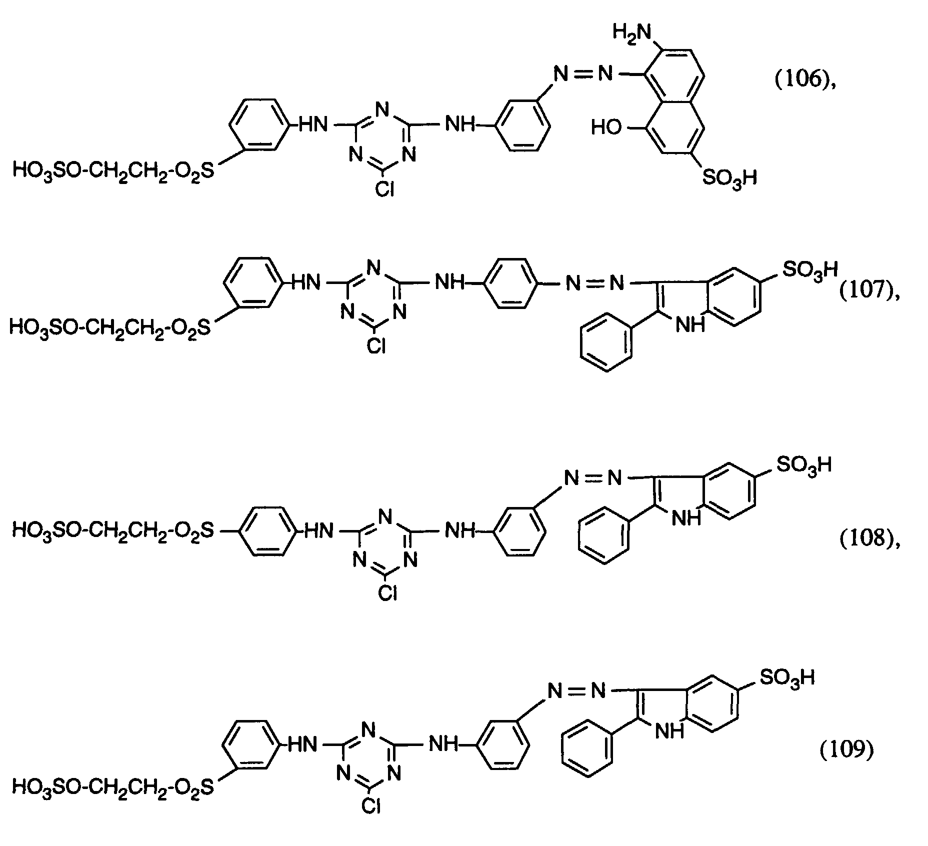 erhalten werden.

Die Farbstoffe der Formeln (104), (105) und (106) färben Wolle und synthetisches Polyamid in orangen bis roten Farbtönen. Die Farbstoffe der Formeln (107), (108) und (109) färben Wolle und synthetisches Polyamid in gelben bis goldgelben Farbtönen.

Werden die in den Beispielen 1 bis 10 angegebenen Farbstoffe mit einer wässrigen Natriumhydroxidlösung bei einem pH-Wert von ca. 9 behandelt, so werden diese Farbstoffe in der entsprechenden Vinylform erhalten.

### Färbevorschrift

Es werden 0,1 Teile des Farbstoffs gemäss Beispiel 1 in 200 Teilen entmineralisiertem Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert Von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mat warmem und kaltem Wasser gewaschen, anschliessend geschleudert und getrocknet. Man erhalt eine rote Färbung, die gute Licht- und Nassechtheiten sowie eine gute Faseregalität aufweist.

## Patentansprüche

1. Reaktivfarbstoffe der Formel 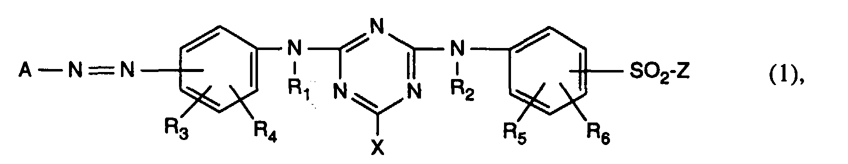 worin
R₁ und R₂ unabhängig voneinander Wasserstoff oder C₁-C₄-Alkyl,
R₃, R₄, R₅ und R₆ unabhängig voneinander Wasserstoff, C₁-C₄-Alkyl, C₁-C₄-Alkoxy, C₂-C₄-Alkanoylamino, Ureido oder Halogen sind,
X Chlor oder Fluor,
Z eine Gruppe der Formel -CH=CH₂ oder -CH₂-CH₂-Y und Y eine Abgangsgruppe ist, und
A ein Rest der Formel 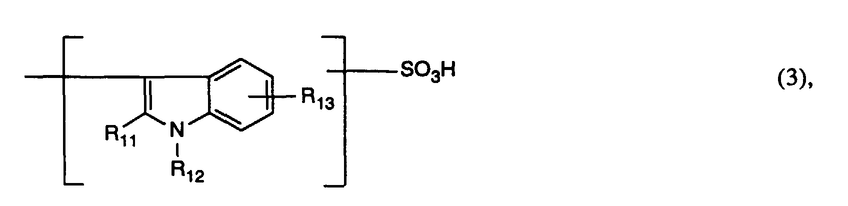 worin
R₁₁ Wasserstoff, C₁-C₈-Alkyl oder unsubstituiertes oder durch C₁-C₄-Alkyl, C₁-C₄-Alkoxy, C₂-C₄-Alkanoylamino oder Halogen substituiertes Phenyl,
R₁₂ Wasserstoff oder C₁-C₈-Alkyl und
R₁₃ Wasserstoff, C₁-C₄-Alkyl, C₁-C₄-Alkoxy, C₂-C₄-Alkanoylamino oder Halogen bedeutet;
oder ein Rest der Formel 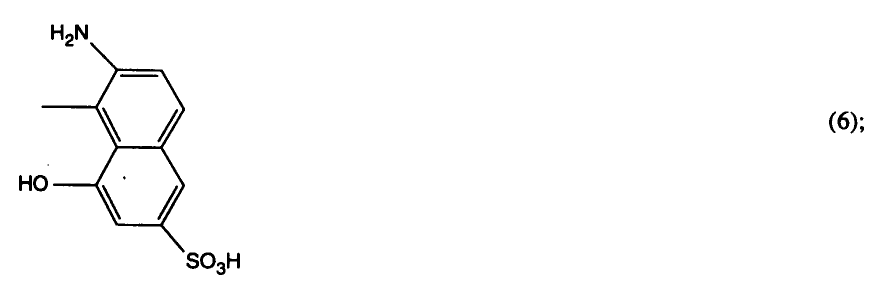 oder ein Rest der Formel 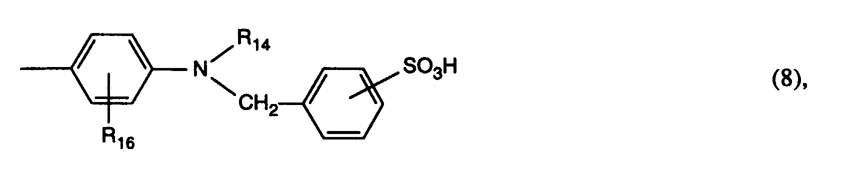
worin R₁₄ Wasserstoff oder C₁-C₄-Alkyl und R₁₆ Wasserstoff, C₁-C₄-Alkyl, C₁-C₄-Alkoxy, C₂-C₄-Alkanoylamino oder Halogen bedeutet; ist.

2. Reaktivfarbstoffe gemäss Anspruch 1, worin Y eine Gruppe der Formel -OSO₃H ist.

3. Reaktivfarbstoffe gemäss einem der Ansprüche 1 und 2, worin X Chlor ist.

4. Reaktivfarbstoffe gemäss einem der Ansprüche 1 bis 3, worin R₁ und R₂ Wasserstoff sind.

5. Reaktivfarbstoffe gemäss einem der Ansprüche 1 bis 4, worin R₃, R₄, R₅ und R₆ Wasserstoff sind.

6. Reaktivfarbstoffe gemäss Anspruch 1, worin R₁, R₂, R₃, R₄, R₅ und R₆ Wasserstoff sind, Y eine Gruppe der Formel -OSO₃H und X Chlor ist.

7. Reaktivfarbstoffe gemäss einem der Ansprüche 1 bis 6, worin A als Rest der Formel (3) ein Rest der Formel 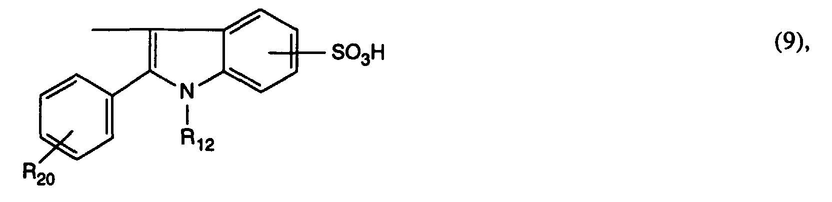 worin R₁₂ Wasserstoff oder C₁-C₈-Alkyl und R₂₀ Wasserstoff, C₁-C₄-Alkyl, C₁-C₄-Alkoxy, C₂-C₄-Alkanoylamino oder Halogen bedeutet, ist.

8. Reaktivfarbstoffe gemäss Anspruch 1, der Formel 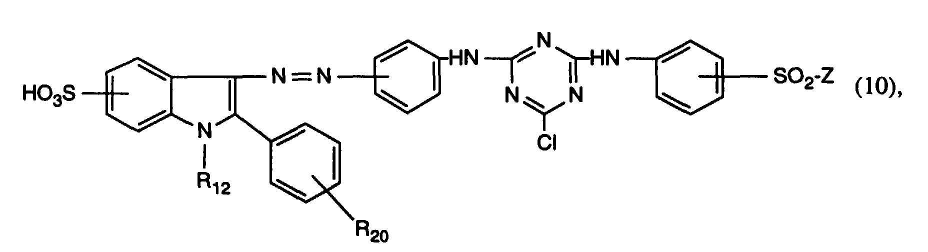 worin R₁₂ Wasserstoff oder C₁-C₈-Alkyl, R₂₀ Wasserstoff, C₁-C₄-Alkyl, C₁-C₄-Alkoxy, C₂-C₄-Alkanoylamino oder Halogen und Z eine Gruppe der Formel -CH=CH₂ oder -CH₂-CH₂-OSO₃H bedeutet, ist.

9. Reaktivfarbstoffe gemäss Anspruch 1, der Formel 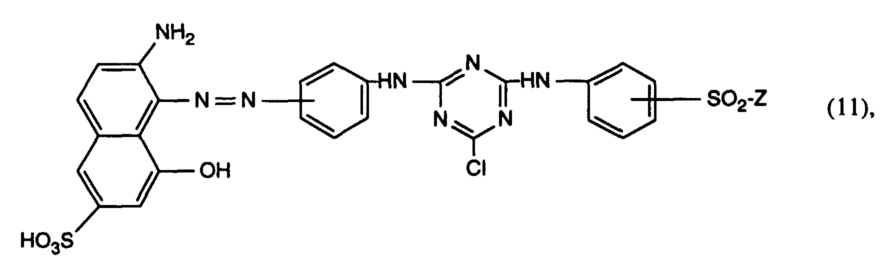 worin Z eine Gruppe der Formel -CH=CH₂ oder -CH₂-CH₂-OSO₃H bedeutet, ist.

10. Reaktivfarbstoffe gemäss einem der Ansprüche 1 bis 9, worin der Rest Z eine Gruppe der Formel -CH₂-CH₂-OSO₃H ist.

11. Verfahren zur Herstellung von Reaktivfarbstoffen gemäss Anspruch 1, dadurch gekennzeichnet, dass man ein Amin der Formel 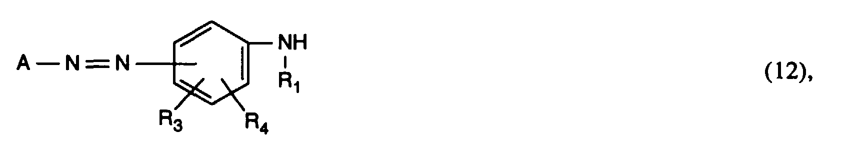 worin A, R₁, R₃ und R₄ die in Anspruch 1 angegebenen Bedeutungen haben, mit einer Verbindung der Formel 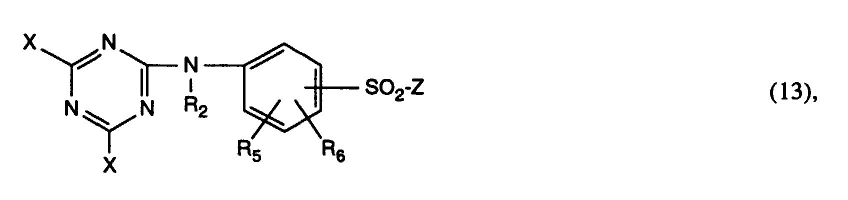 worin Z, X, R₂, R₅ und R₆ die in Anspruch 1 angegebenen Bedeutungen haben, kondensiert, und gegebenenfalls den Rest Z in den Rest der Formel -CH=CH₂ überführt.

12. Verwendung der Reaktivfarbstoffe gemäss einem der Ansprüche 1 bis 10 bzw. der gemäss Anspruch 11 erhaltenen Reaktivfarbstoffe zum Färben oder Bedrucken von hydroxylgruppenhaltigem oder stickstoffhaltigem Fasermaterial.

13. Verwendung gemäss Anspruch 12 zum Färben oder Bedrucken von natürlichem oder synthetischem Polyamidfasermaterial, insbesondere von Wolle.

## Claims

1. A reactive dye of formula 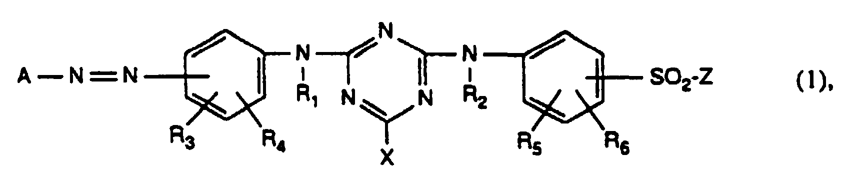 wherein
R₁ and R₂ are each independently of the other hydrogen or C₁-C₄alkyl, R₃, R₄, R₅ and R₆ are each independently of one another hydrogen, C₁-C₄alkyl, C₁-C₄alkoxy, C₂-C₄alkanoylamino, ureido or halogen,
X is chloro or fluoro,
Z is a group of formula -CH=CH₂ or -CH₂-CH₂-Y, and Y is a leaving group, and
A is a radical of formula 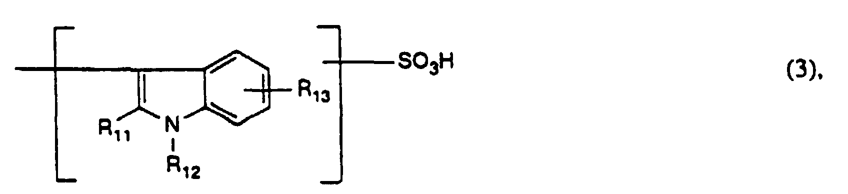 wherein
R₁₁ is hydrogen, C₁-C₈alkyl or phenyl which is unsubstituted or substituted by C₁-C₄alkyl, C₁-C₄alkoxy, C₂-C₄alkanoylamino or halogen,
R₁₂ is hydrogen or C₁-C₈alkyl, and
R₁₃ is hydrogen, C₁-C₄alkyl, C₁-C₄alkoxy, C₂-C₄alkanoylamino or halogen;
or a radical of formula 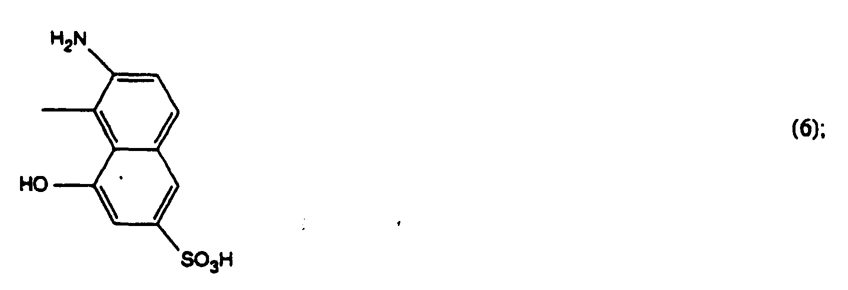 or a radical formula 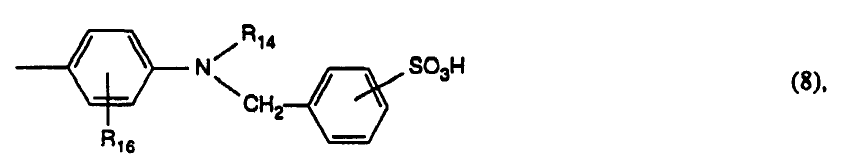
wherein R₁₄ is hydrogen or C₁-C₄alkyl, and R₁₆ is hydrogen, C₁-C₄alkyl, C₁-C₄alkoxy, C₂-C₄alkanoylamino or halogen.

2. A reactive dye according to claim 1, wherein Y is a group of formula -OSO₃H.

3. A reactive dye according to one of claims 1 and 2, wherein X is chloro.

4. A reactive dye according to one of claims 1 to 3, wherein R₁ and R₂ are hydrogen.

5. A reactive dye according to one of claims 1 to 4, wherein R₃, R₄, R₅ and R₆ are hydrogen.

6. A reactive dye according to claim 1, wherein R₁, R₂, R₃, R₄, R₅ and R₆ are hydrogen, Y is a group of formula -OSO₃H, and X is chloro.

7. A reactive dye according to one of claims 1 to 6, wherein A as a radical of formula (3) is a radical of formula 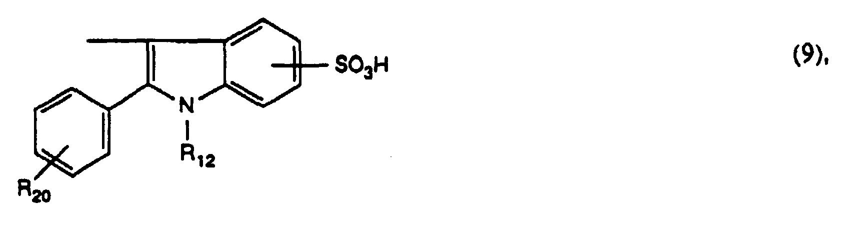 wherein R₁₂ is hydrogen or C₁-C₈alkyl, and R₂₀ is hydrogen, C₁-C₄alkyl, C₁-C₄alkoxy, C₂-C₄alkanoylamino or halogen.

8. A reactive dye according to claim 1, of formula 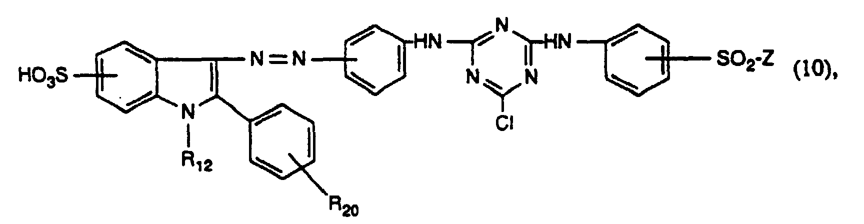 wherein R₁₂ is hydrogen or C₁-C₈alkyl, R₂₀ is hydrogen, C₁-C₄alkyl, C₁-C₄alkoxy, C₂-C₄alkanoylamino or halogen, and Z is a group of formula -CH=CH₂ or -CH₂-CH₂-OSO₃H.

9. A reactive dye according to claim 1, of formula 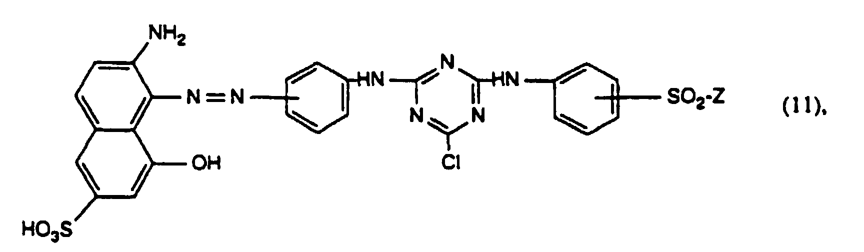 wherein Z is a group of formula -CH=CH₂ or -CH₂-CH₂-OSO₃H.

10. A reactive dye according to one of claims 1 to 9, wherein the radical Z is a group of formula -CH₂-CH₂-OSO₃H.

11. A process for the preparation of a reactive dye according to claim 1, which comprises condensing an amine of formula 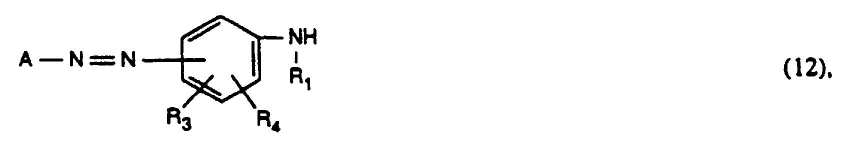 wherein A, R₁, R₃ and R₄ are as defined in claim 1, with a compound of formula 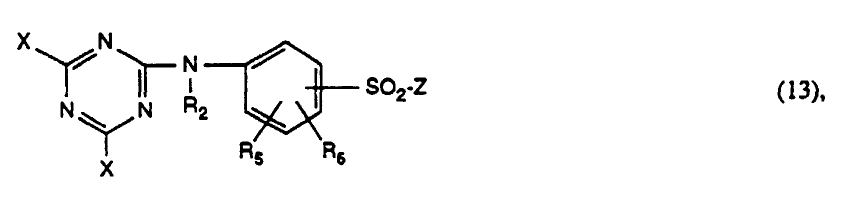 wherein Z, X, R₂, R₅ and R₆ are as defined in claim 1, and, if desired, converting the radical Z to the radical of formula -CH=CH₂.

12. Use of a reactive dye according to one of claims 1 to 10 or of a reactive dye obtained according to claim 11 for dyeing or printing hydroxyl-containing or nitrogen-containing fibre material.

13. Use according to claim 12 for dyeing or printing natural or synthetic polyamide fibre material, in particular wool.

## Revendications

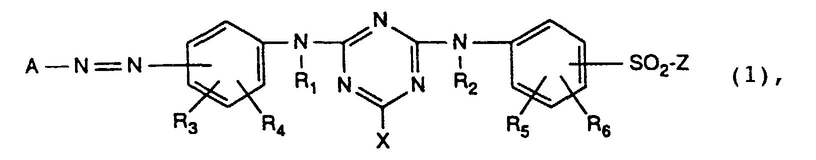

1. Colorants réactifs de formule où
R₁ et R₂ représentent, indépendamment l'un de l'autre, des atomes d'hydrogène ou des groupes alkyle en C₁-C₄,
R₃, R₄, R₅ et R₆ représentent, indépendamment les uns des autres, des atomes d'hydrogène, des groupes alkyle en C₁-C₄, alkoxy en C₁-C₄, (alcanoyl en C₁-C₄)amino, uréido ou des atomes d'halogènes,
X représente un atome de chlore ou de fluor,
Z représente un groupe de formule -CH=CH₂ ou -CH₂-CH₂-Y et Y est un groupe partant,
et
A représente un reste de formule 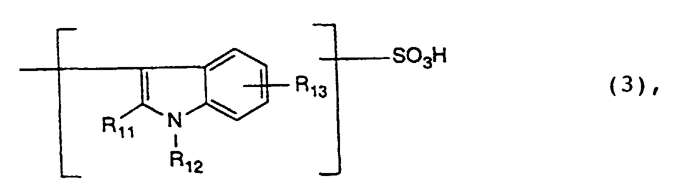 où
R₁₁ représente un atome d'hydrogène, un groupe alkyle en C₁-C₈ ou phényle non substitué ou substitué par des substituants alkyle en C₁-C₄, alkoxy en C₁-C₄, (alcanoyl en C₂-C₄)amino ou halogène,
R₁₂ représente un atome d'hydrogène ou un groupe alkyle en C₁-C₈ et
R₁₃ représente un atome d'hydrogène, des groupes alkyle en C₁-C₄, alkoxy en C₁-C₄, (alcanoyl en C₂-C₄)amino ou halogène ;
ou un reste de formule 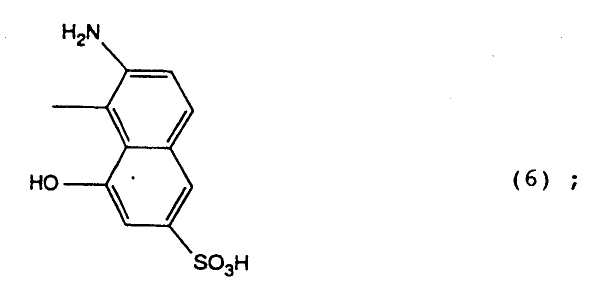 où un reste de formule 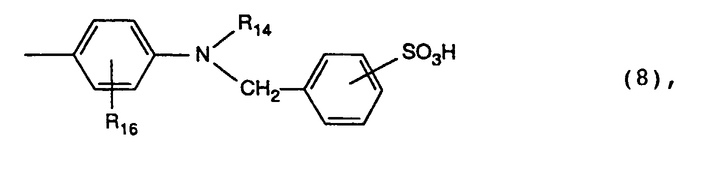 où
R₁₄ représente un atome d'hydrogène ou un groupe alkyle en C₁-C₄, et
R₁₆ représente un atome d'hydrogène, des groupes alkyle en C₁-C₄, alkoxy en C₁-C₄, (alcanoyl en C₂-C₄)-amino ou halogène.

2. Colorants réactifs selon la revendication 1, où Y représente un groupe de formule -OSO₃H.

3. Colorants réactifs selon l'une des revendications 1 et 2, où X représente un atome de chlore.

4. Colorants réactifs selon l'une des revendications 1 à 3, où R₁ et R₂ représentent des atomes d'hydrogène.

5. Colorants réactifs selon l'une des revendications 1 à 4, où R₃, R₄, R₅ et R₆ représentent des atomes d'hydrogène.

6. Colorants réactifs selon la revendication 1, où R₁, R₂, R₃, R₄, R₅ et R₆ représentent des atomes d'hydrogène et Y représente un groupe de formule -OSO₃H et X représente un atome de chlore.

7. Colorants réactifs selon l'une des revendications 1 à 6, où A, en tant que reste de formule (3) représente un reste de formule 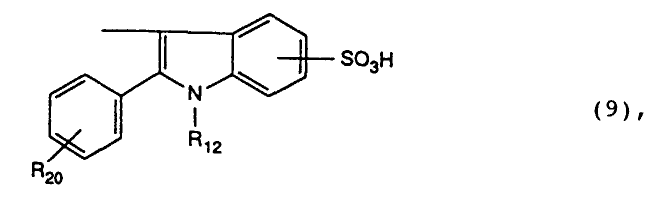 où
R₁₂ représente un atome d'hydrogène ou un groupe alkyle en C₁-C₈ et
R₂₀ représente un atome d'hydrogène, des groupes alkyle en C₁-C₄, alkoxy en C₁-C₄, (alcanoyl en C₂-C₄)-amino ou halogène.

8. Colorants réactifs selon la revendication 1, de formule 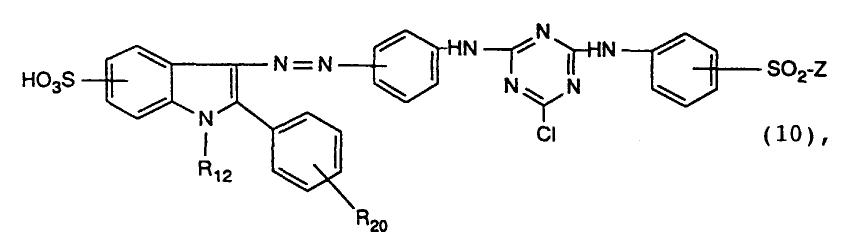 où
R₁₂ représente un atome d'hydrogène ou un groupe alkyle en C₁-C₈,
R₂₀ représente un atome d'hydrogène, des groupes alkyle en C₁-C₄, alkoxy en C₁-C₄, (alcanoyl en C₂-C₄)-amino ou halogène, et
Z représente un groupe de formule -CH=CH₂ ou -CH₂-CH₂-OSO₃.

9. Colorants réactifs selon la revendication 1, de formule 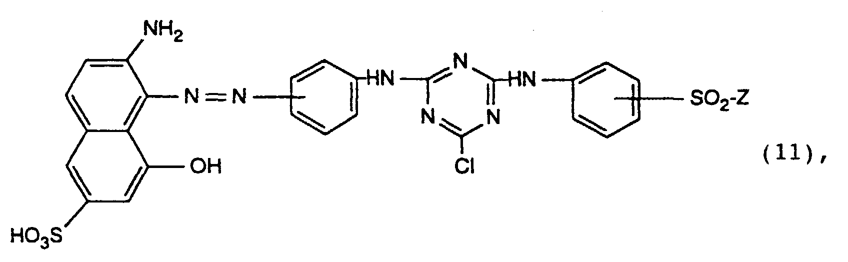 où Z représente un groupe de formule -CH=CH₂ ou en particulier -CH₂-CH₂-OSO₃H.

10. Colorants réactifs selon l'une des revendications 1 à 9, où le reste Z représente un groupe de formule -CH₂-CH₂-OSO₃H.

11. Procédé de préparation de colorants réactifs selon la revendication 1, caractérisés en ce qu'on condense une amine de formule 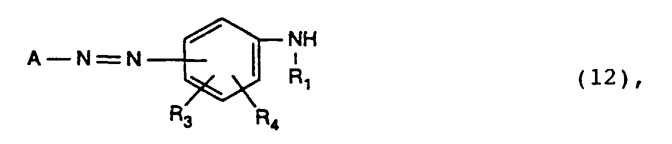 où A, R₁, R₃ et R₄ possèdent les significations données à la formule (1), sur un composé de formule 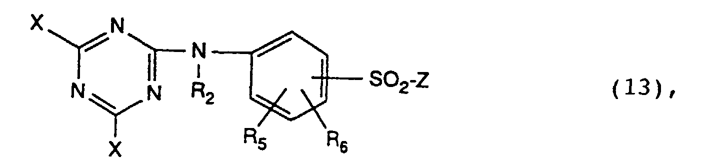 où Z, X, R₂, R₅ et R₆ possèdent les significations données à la formule (1), et éventuellement on transforme le reste Z en reste de formule -CH=CH₂.

12. Utilisation des colorants réactifs selon l'une des revendications 1 à 10 ou obtenus selon la revendication 11 pour la teinture ou l'impression de matières fibreuses contenant des groupes hydroxyle ou l'azote.

13. Utilisation des colorants réactifs selon la revendication 12 pour la teinture ou l'impression de matières fibreuses polyamides naturels ou synthétiques, en particulier de la laine.
